Europäisches Patentamt

European Patent Office

Office européen des brevets

(19)

(11) Veröffentlichungsnummer: **0 228 998 B1**

# EUROPÄISCHE PATENTSCHRIFT

(12)

(45) Veröffentlichungstag der Patentschrift: **17.07.91**

(51) Int. Cl.5: **F16L 55/16, B29C 63/36**

(21) Anmeldenummer: **86810615.4**

(22) Anmeldetag: **30.12.86**

(54) Verfahren zur Sanierung verlegter Rohrleitungen.

(30) Priorität: **31.12.85 DE 3546417**

(43) Veröffentlichungstag der Anmeldung:
**15.07.87 Patentblatt 87/29**

(45) Bekanntmachung des Hinweises auf die
Patenterteilung:
**17.07.91 Patentblatt 91/29**

(84) Benannte Vertragsstaaten:
**AT BE CH DE ES FR GB GR IT LI LU NL SE**

(56) Entgegenhaltungen:
**EP-A- 0 082 212**
**EP-A- 0 168 053**
**AU-B- 475 828**
**FR-A- 2 258 581**
**FR-A- 2 542 416**

(73) Patentinhaber: **Arent AG Rechts- und Unternehmensberatung**
**Gutenbergstrasse 1**
**CH-3011 Bern(CH)**

(72) Erfinder: **Rogalski, Günter**
**In der Hohl 13**
**W-5400 Koblenz(DE)**

**Beschreibung**

Die Erfindung betrifft ein Verfahren zur Sanierung verlegter Rohrleitungen.

Es ist allgemein bekannt, dass alle verlegten Rohrleitungen oder Kanäle bauseitserstellter, vorfabrizierter oder sonstiger Art, wie Tunnelzuleitungen, Transportleitungen sowie Abzweigungen, Bogen, Muffen, Hausanschlüsse, Verteilerrohre und derartige bauliche Einrichtungen früher oder später Schäden, d.h. Undichtheiten aufweisen. Die aus diesen Leitungssystemen austretenden Abwasser, chemische Mittel, Gase oder sonstige Medien gelangen in die Umwelt und führen dort zu unerwünschten Erscheinungen wie zur Verseuchung des Grundwassers, Ueberlastung der Abwasserversorung, zum Verlust des Leitungsinhaltes usw.

Durch verschiedene Umweltschutzgesetze sind in der letzten Zeit vermehrt alle Betreiber dieser Leitungssysteme gehalten, die aufgedeckten Schäden sofort zu beseitigen und die Leitungssysteme und das Ersetzen durch neue Leitungsabschnitte ist mit kleinen Ausnahmen ein äusserst kostspieliges Unterfangen. Dazu kommt es, dass viele dieser Leitungssysteme nur stellenweise noch zugänglich und im übrigen überhaupt nicht mehr freizulegen sind. Dies vor allem deswegen, weil diese z.B. sehr tief und unter anderen Leitungen wie z.B. für Telefon, Strom, Gas usw. liegen oder sich unter Gebäuden, Strassen, Bahnlinien, Flugplatzpisten usw. befinden.

Aus den obgenannten Gründen wurden verschiedene Sanierungsverfahren entwickelt und praktiziert. Bei den meisten bekannten Verfahren versucht man die Leitungssysteme nachträglich auf der Innenseite auszukleiden und somit vor allem die Undichtheiten des Systems zu beheben.

Insbesondere ist durch die Australische Patentschrift 475 828 ein derartiges Verfahren bekannt, bei dem ein Schlauch, bestehend aus einer dichten Innen- und Aussenlage und einer mit aushärtbarem Harz imprägnierten Zwischenlage aufgetrieben und das Harz im aufgetriebenen Zustand des Schlauches mit Hilfe von Wärme ausgehärtet wird. Bei diesem bekannten Verfahren wird die Zwischenanlage während des Einführens des Schlauches in die zu sanierende Rohrleitung mit einer Harzmischung imprägniert, die selbsthärtend ist, d.h. eine bestimmte Zeit nach dem Mischen des Harzes mit einem Härter von selbst (ohne äussere Einwirkung) erhärtet. Dazu wird an zahlreichen Stellen längs des Schlauches ein Einschnitt in die Aussenlage desselben gemacht und die Harzmischung durch diesen Einschnitt in die Zwischenlage injiziert. Das Imprägnieren der Zwischenlage erfolgt also zwangsläufig in einem Arbeitsgang, nämlich gleichzeitig mit dem Einbringen des Schlauches in die Rohrleitung.

Für eine gleichmässige Imprägnierung muss jedoch die Harzmischung an zahlreichen, dicht aufeinanderfolgenden und auch über den Umfang verteilten Stellen des Schlauches injiziert werden, wobei jedesmal ein Schlitz in die Aussenlage gemacht werden muss. Dies ist umständlich, zeitraubend und für eine 100 % gleichmässige Imprägnierung der Zwischenlage völlig ungenügend. Trotzdem muss die Zwischenlage schnell imprägniert und der Schlauch auch schnell in die Rohrleitung eingebracht werden, damit die Harzmischung zuverlässig erst dann erhärtet, wenn der Schlauch auf seiner ganzen Länge in der richtigen Lage in der Rohrleitung plaziert und aufgetrieben ist.

Wenn die Harzmischung vorher erhärtet treten erhebliche Komplikationen auf. Beginnt das Erhärten, wenn der Schlauch sich erst teilweise in der Rohrleitung befindet, so kann der teilweise ausgehärtete Schlauch aus der Leitung auch nicht mehr herausgezogen werden, um die Störung zu beseitigen. Jedenfalls ist es nicht möglich, den Schlauch mit der imprägnierten Zwischenlage vorzufabrizieren und später nach Bedarf zur Sanierung von Rohrleitungen zu verwenden.

Ziel der vorliegenden Erfindung ist es, ein Verfahren der im Oberbegriff des Anspruchs 1 angegebenen Art zu schaffen, das einfacher und zuverlässiger ist und es ermöglicht, einen vollständig vorfabrizierten Schlauch ohne Komplikationen in die Rohrleitung einzubringen.

Dieses Ziel wird durch das Verfahren gemäss dem Anspruch 1 erreicht.

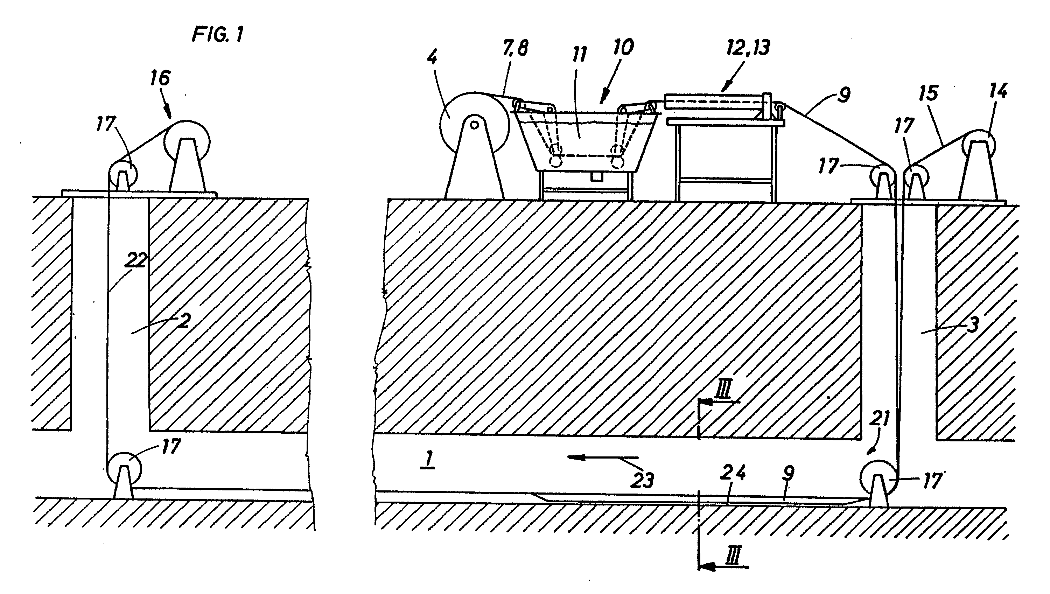

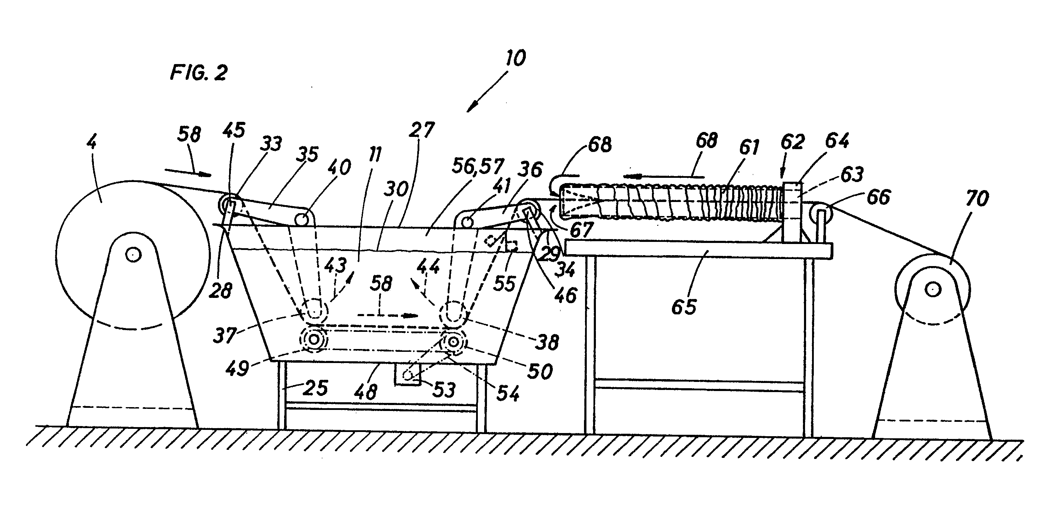

Dadurch werden folgende Vorteile erzielt:
Da die Harzmischung erst unter der Wirkung der UV-Strahlung erhärtet, braucht sie nicht erst unmittelbar vor bzw. während des Einbringens des Schlauches durch Schlitze in dessen Aussenlage in die Zwischenlage injiziert zu werden. Die Zwischenlage kann vielmehr bereits bei der Herstellung des Schlauches mit der Harzmischung vollständig imprägniert, d.h. einfach durch ein Bad mit flüssigem Harz gezogen werden. (Fig. 1). Der Schlauch kann sogar vorfabriziert und bis zu seiner Verwendung gelagert werden (Fig. 2). Wenn beim Einbringen des Schlauches in die Rohrleitung Schwierigkeiten auftreten, was eine Verzögerung zur Folge hat, besteht keinerlei Risiko einer vorzeitigen Erhärtung mit den sich daraus ergebenden Komplikationen.

Kurz gefasst erfüllt das erfindungsgemässe Verfahren die Hauptfoderungen der Sanierung von Rohrleitungen in Bezug auf Umweltschutz, Wirtschaftlichkeit und Werterhaltung in allen Teilen.

Im folgenden werden anhand der Zeichnung Ausführungsbeispiele der Erfindung näher erläutert. Es zeigen:

    Fig. 1      eine erfindungsgemässe Vorrichtung während des Einziehens eines Schlauches in eine zu sanierende Rohrleitung, teilweise geschnitten,

Fig. 2 eine Ansicht auf eine Imprägnierungsstrecke und eine Vorrichtung zum Ueberziehen der um die Innenlage gelegten und imprägnierten Zwischenlage mit der Aussenlage,

Fig. 3 einen Querschnitt durch die Rohrleitung nach der Linie III - III in Fig. 1,

Fig. 4 eine Variante des Einbringens des Schlauches in die Rohrleitung durch Umstülpen im Längsschnitt,

Fig. 5 einen Längsschnitt durch die Rohrleitung während des Aushärtens des Schlauches,

Fig. 6 eine Fig. 5 entsprechende erste Variante des Aushärtens des durch Umstülpen in die Rohrleitung eingebrachten Schlauches,

Fig. 7 eine Fig. 5 entsprechende zweite Variante des Aushärtens des Schlauches,

Fig. 8 einen Querschnitt nach der Linie V - V in Fig. 5,

Fig. 9 eine Vorrichtung zum Anpressen des Schlauches an die zu sanierende Rohrleitung und zum Aushärten im Längsschnitt,

Fig. 10 eine zweite Variante der Vorrichtung von Fig. 9,

Das Verfahren zur Sanierung verlegter Rohrleitungen besteht im wesentlichen darin, dass ein aus drei Lagen gebildeter Schlauch, dessen Zwischenlage mit einem strahlungshärtbaren Harz imprägniert ist, in eine zu sanierende Rohrleitung eingebracht, danach aufgetrieben und mit Hilfe von einer im Schlauchinnern verfahrbaren Strahlungsquelle ausgehärtet wird. Als strahlungshärtbares Harz wird vorzugsweise ein mit UV-Strahlung härtbares Harz gewählt. Es kann sich auch um Harz handeln, das mit Wärme-, Elektronenstrahlung oder anderer Strahlungsart härtbar ist.

Beim Verfahren zur Herstellung verlegter Rohrleitungen wird zuerst die Zwischenlage des Schlauches mit einem UV-Strahlung härtbarem Harz imprägniert, dann am gewünschten Ort im Freien ausgebreitet, mit Druckluft aufgetrieben und mit den in der Umgebung vorhandenen, natürlichen UV-Strahlung ausgehärtet.

Nach Fig. 1 ist eine erfindungsgemässe Vorrichtung zur Sanierung einer verlegten Rohrleitung 1 zwischen zwei besteigbaren Schächten 2,3 installiert. Die Vorrichtung umfasst eine Vorratstrommel 4 für eine um eine Innenlage 7 gelegte Zwischenlage 8 eines herzustellenden Schlauches 9, eine wannenförmige Imprägnierstrecke 10 mit einem Imprägnierharz 11, eine Vorrichtung 12 zum Ueberziehen der um die Innenlage 7 gelegten und imprägnierten Zwischenlage 8 mit einer Aussenlage 13, eine Vorratswalze 14 für einen Schutzmantel 15 sowie eine Zugvorrichtung 16 zum Einziehen des Schlauches 9 in die Rohrleitung 1. Im übrigen sind Führungs- und Umlenkrollen 17 in der Rohrleitung 1 sowie in den Schächten 2,3 angebracht.

Der zur Sanierung bereitgestellte dreilagige Schlauch 9 wie noch näher im folgenden dargestellt, wird durch den besteigbaren oder zugänglich gemachten Schacht 3 gemeinsam mit dem Schutzmantel 15 zum Rohreingang 21 gebracht. Zweckmässigerweise wird dann ein von der Zugvorrichtung 16 führendes Zugseil 22 an die untere Umfangshälfte des Schlauches 9 umfassenden Schutzmantel 15 angehängt, wobei beim Einziehen in die Rohrleitung 1 in der Pfeilrichtung 23 der im Schutzmantel 15 eingebetete und auf dem Schutzmantel liegende Schlauch 9 mitgeführt wird. Der Schutzmantel 15 bestreicht dabei die Sohle 24 der alten beschädigten Rohrstrecke und schützt den Schlauch 9 wirksam vor mechanischen Beschädigungen. Gleichzeitig ist es vorteilhaft, dass beim Durchziehen nicht direkt am Schlauch 9 sondern am Schutzmantel 15 gezogen wird und somit alle Reibungswiderstände durch den Schutzmantel 15 aufgefangen werden. Auf diese Weise kann es keinesfalls zu einer allfälligen unerwünschten Längsdehnung des Schlauches 9 beim Durchziehen durch die Rohrleitung 1 kommen.

Als Zugvorrichtung 16 wählt man üblicherweise eine auf der Oberfläche installierte Seilwinde, die mit Hilfe des Zugseils 22 den Schutzmantel 15 und den Schlauch 9 in die Rohrleitung 1 einbringt.

Nach einem anderen, in den Zeichnungen nicht dargestellten Vorschlag wird der Schlauch 9 mit dem Schutzmantel 15 von einer mit einem Antrieb ausgerüsteten oder gezogenen, durch die zu sanierende oder neu herzustellende Strecke laufenden Zugvorrichtung gezogen. In den Fachkreisen sind diese Zug- und Bohrvorrichtungen unter dem Namen Erdverdrängungsbodenrakete oder Berst- oder Zertrümmerungssysteme bekannt.

In der Fig. 2 weist die Imprägnierstrecke 10 einen mit flüssigem Harz 11 gefüllten, auf einem Gestell 25 gelegenen, wannenförmigen Behälter 27 auf. An jedem der oberen Ränder 28, 29 des Behälters 27, oberhalb des Harzniveaus 30 sind je zwei Umlenkwalzen 33, 34 angebracht. Im Harz 11 eingetaucht, befinden sich an hebelförmig gebildeten Armen 35, 36 zwei Anpresswalzen 37, 38, die mit Hilfe eines Handgriffes 40, 41 in der Richtung der Pfeile 43, 44 um die Drehachse 45, 46 der Umlenkwalzen 33, 34, kippbar sind. In eingetauchtem Zustand liegen die Anpresswalzen 37, 38 auf zwei im Abstand zum Behälterboden 48 angebrachten Antriebswalzen 49, 50, die mit einem Motor 53 über einen Zahnriemen 54 angetrieben sind. Ein in der Durchlassbreite verstellbarer Abstreifer 55 ist über dem Harzniveau 30 an den Behälterwänden 56, 57 angebracht. Alle Walzen 33,34; 37,38; 49,50; stehen senkrecht zu der mit Pfeil 58 gekennzeichneten Arbeitsrichtung.

Wie weiter ersichtlich, schliesst an die Imprägnierstrecke 10 die Vorrichtung 12 zum Ueberziehen der um die Innenlage 7 gelegten und imprägnierten Zwischenlage 8 mit der Aussenlage 13 an. Sie hat einen hohlen Träger 61 für die nach Art eines Faltenbalges zusammengeschobene Aussenlage 13. Der Träger 61 weist einen flachen, an seinen Enden elliptischen Querschnitt, auf und ist mit einem 62 bezeichneten Ende in einer mit einem Durchlass 63 versehenen Platte 64 verankert, die wiederum an einem tischförmigen Gestell 65 mit einer Umlenkwalze 66 angebracht ist.

Bei der Imprägnierung geht man auf folgende Weise vor:

Zuerst wird auf den hohlen Träger 61 die Aussenlage 13 in ausreichender Menge lose aufgeschoben. Als Aussenlage 13 wird eine schlauchförmige Kunststoff-Folie gewählt. Danach werden die Anpresswalzen 37, 38 aus dem Harz 11 in der Pfeilrichtung 43, 44 gekippt und die um die Innenlage 7 gelegte, flachgedrückte und auf die Vorratswalze 4 aufgerollte Zwischenlage 8 wird unter den Anpresswalzen 37, 38 über den Behälter 27 bis zum mit 67 bezeichneten Eingang in den Träger 61 gezogen und gehalten. Schliesslich werden die Anpresswalzen 37, 38 zurück in das Harz 11 gekippt, wobei die Zwischenlage 8, von den Anpresswalzen 37, 38 gedrückt, in das Harz 11 bis zu den Antriebswalzen 49, 50 eintaucht. Zuletzt wird die in Berührung mit der Aussenlage 13 gebrachte Zwischenlage 8 durch den hohlen Träger 61 bei der gleichzeitigen Einschaltung des Antriebes für die Antriebswalzen 49, 50 gezogen. Dabei zieht sich die Aussenlage 13 bildende Kunststoff-Folie in der mit Pfeil 68 gezeichneten Richtung vom Träger ab und umhüllt fortlaufend die Zwischenlage 8.

Die Anpresskraft der Anpresswalzen 37, 38 ist so berechnet, dass die zwischen den Anpress- und Antriebswalzen 37,38; 49,50 durchlaufende Zwischenlage 8 ausreichend, gleichmässig und vor allem ohne Luftrückstände mit dem Harz 11 benetzt wird. Ueberschüssiges Harz 11 wird beim Durchziehen der Zwischenlage 8 durch den in der Andrückkraft und Durchlass verstellbaren Abstreifer 55 im Behälter 27 zurückgehalten.

Der auf diese Weise vorbereitete dreilagige Schlauch 9 wird entweder an eine Vorratstrommel 70 aufgerollt oder auf eine nicht dargestellte Palette gefaltet und auf Vorrat gelagert oder kann direkt an der Sanierungsstelle weiter durch den Schacht 3 zu der zu sanierenden Rohrleitung 1 geleitet werden (Fig. 1).

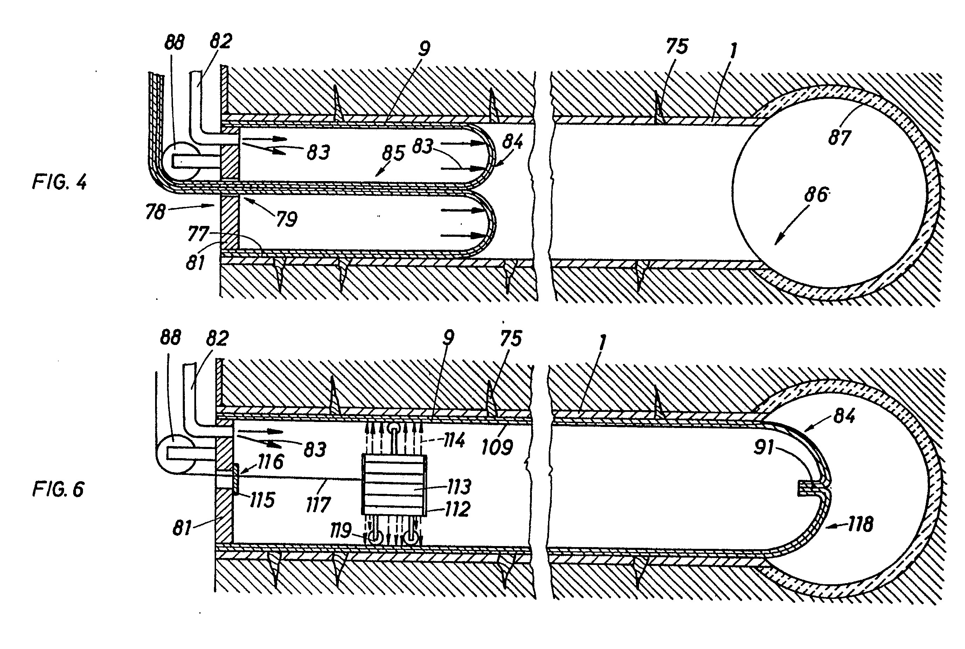

Fig. 3 zeigt im Schnitt eine mit Rissen 75 beschädigte im Erdreich 76 gelegte Rohrleitung 1, mit den flachgedrückten und dem Rohrprofil angepassten flachgelegten dreilagigen Schlauch 9 und den Schutzmantel 15 beim Einziehen des Schlauches 9. Der Schutzmantel 15 soll reissfest und so ausgebildet werden, dass es beim Durchziehen durch die Rohrleitung 1, da das Zugseil 22 am Schutzmantel angehängt und am Schutzmantel 15 gezogen wird, nicht zu einer unerwünschten Dehnung vor allem des Schlauches 9 kommt. Wie oben erwähnt könnte der Schutzmantel beispielsweise aus einer in der Längsrichtung mit Fäden verstärkten Kunststoff-Folie aus Polyamid oder aus einem Textilgewebe mit einer Stärke von etwa 0,5 mm gebildet werden.

Um die Sohle 24 einer stark beschädigten und oberflächlich unregelmässigen Rohrleitung 1 ausbessern zu können, wird nach einem andern Vorschlag der Schutzmantel 15 aus einem harzaufnehmenden Material vorzugsweise aus einem in der Längsrichtung verstärkten Nadelfilz gewählt, und mit einem zweikomponenten Harz imprägniert. Der schalenförmige Schutzmantel gewährleistet nach Aushärten eine glatte und bruchfreie Oberfläche der Rohrleitungssohle 24.

In Fig. 4 wird eine andere Art des Einziehens des dreilagigen Schlauches 9 in die Rohrleitung 1 dargestellt. Diese Variante ist besonders dann vorteilhaft, wenn die Rohrleitung 1 nur von einer Seite zugänglich ist, wie z.B. bei den Hausanschlüssen in den Abwasserkanal oder bei Gas- und Trinkwasserleitungen.

Beim Einziehen des dreilagigen Schlauches 9 in die Rohrleitung 1 geht man wie folgt vor: Die Innenseite 77 des Anfanges des Schlauches 9 wird zuerst nach aussen umgestülpt und am Rohreingang 78 mit einem in der Mitte 79 für den zusam-mengedrückten Schlauch 9 ausgesparten, Dichtver-schluss 81 gehalten. Daraufhin wird durch eine am Dichtverschluss 81 angebrachte Druckleitung 82 Luft, mit Pfeil 83 bezeichnet, zwischen die Umstülpung 84 und den anschliessenden Schlauchabschnitt 85 geblasen bis die Umstülpung 84 fortlaufend bis zum Rohrausgang 86 in eine andere Rohrleitung 87 getrieben wird. Am Dichtverschluss 81 ist eine Umlenkrolle 88 zum Leiten des zusammengedrückten Schlauches 9 angebracht. Um die Umstülpung in der ganzen Schlauchlänge durchführen zu können, ist der Schlauch 9 am anderen Ende 91 wie in Fig. 6 dargestellt dichtfest verschlossen.

Die Fig. 5 zeigt den dreilagigen Schlauch 9 nach Erreichen seiner Endlage, d.h. sobald er sich in einer mit Erdreich 76 umgebenden mit Rissen 75 beschädigten Rohrleitung 1 nach Einziehen vom Schacht 2 bis zum Schacht 3 erstreckt. Der Schlauch 9 wird am Anfang 92 und Ende 93 mittels in den Schlauch 9 eingesetzter Dichtverschlüsse 94, 95 abgeschlossen und über eine Druckluftleitung 96 mit Druckluft, mit Pfeilen 97 bezeichnet, aufgetrieben und auf seiner ganzen Länge an die durch Risse 75 beschädigte Rohrleitung 1 angepresst. Ueber ein Manometer 98 ist der erforderliche Luftdruck zu kontrollieren.

In diesem Zustand kann die Aushärtung mittels mit Pfeil 99 bezeichneten Strahlen erfolgen. Dazu ist bereits vor dem Einsetzen der Dichtverschlüsse 94, 95 ein fahrbares Gestell 101 mit einer Strahlungsquelle 102 z.B. UV-Strahlungsquelle in den Schlauch 9 eingesetzt worden. Das Gestell 101 lässt sich mit Hilfe der über Umlenkrollen 103, 104 führende Zugseile 105, 106 von Dichtverschluss 94 zu Dichtverschluss 95 mit einer für die Härtung des Harzes 11 vorbestimmten Geschwindigkeit bewegen, solange bis der Schlauch 9 aushärtet, wobei ein Elektrokabel 107 zur Stromversorgung mitgeführt wird. Das Gestell 101 verfügt über Distanzrollen 108, welche eine gute Führung und insbesondere einen gleichmässigen Abstand der Strahlungsquelle 102 zur Schlauchinnenwendung 109 gewährleisten.

Die Dichtverschlüsse 94, 95 müssen nicht absolut dicht sein, weil durch die kontinuierte Luftzufuhr der Luftdruck im Schlauchinnern erhalten bleibt.

Nach der Aushärtung des Schlauches 9 werden die Dichtverschlüsse 94, 95 und das fahrbare Gestell 101 herausgenommen und die über die sanierte Rohrleitung 1 ragenden Schlauchenden 92, 93 abgeschnitten.

Die Fig. 6 zeigt die Aushärtung des dreilagigen Schlauches 9 nach dessen Umstülpung bis zum Rohrausgang 86 (Fig. 4). Vor dem Einsetzen des Dichtverschlusses 81 wird ein fahrbares Gestell 112 mit einer Strahlungsquelle 113 mit Pfeil 114 bezeichneten Strahlen z.B. UV-Strahlungsquelle in den Schlauch 9 gebracht. Am Dichtverschluss 81 ist eine mit 115 bezeichnete Dichtungsklappe mit einem Durchlass 116 für ein Elektrokabel 117 zur Stromversorgung angebracht. Daraufhin wird der am Ende 118 verschlossene Schlauch 9 mit Druckluft aufgeblasen. Das fahrbare mit Distanzrollen 119 versehene Gestell 112 ist, im Gegensatz zur Lösung in Fig. 5, mit einem Antrieb ausgerüstet und bewegt sich mit einer für die Härtung des Harzes 11 vorbestimmten Geschwindigkeit durch das Innere des Schlauches.

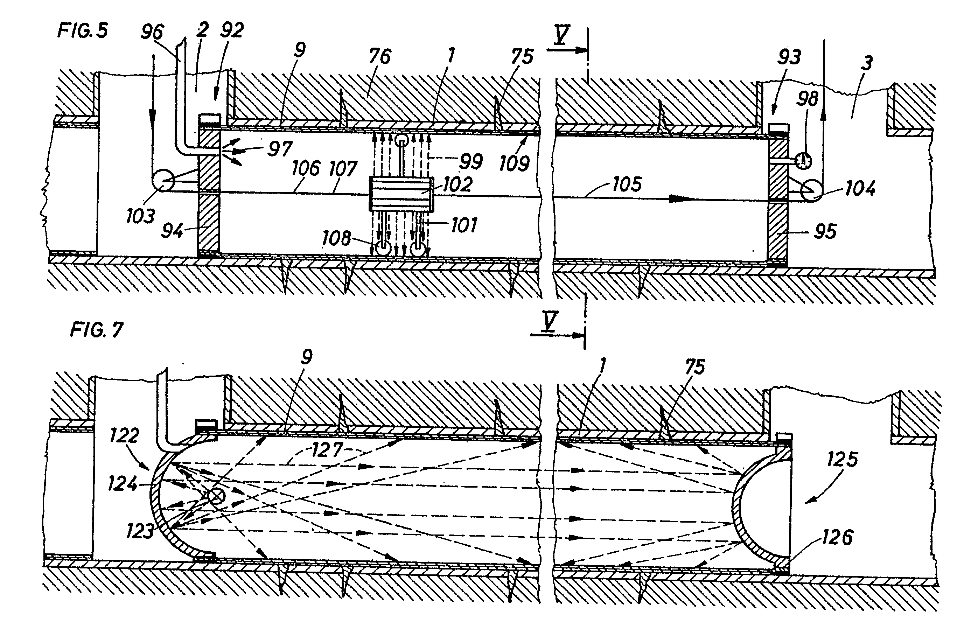

Bei der in Fig. 7 dargestellten Variante des Harzhärtens ist eine mit einem konkaven Reflektor 122 versehene Strahlungsquelle 123 an der Innenseite eines der Dichtverschlüsse 124 und ein konvexer Reflektor 125 an der Innenseite des anderen Dichtverschlusses 126 angebracht. Die Einbringung des dreilagigen Schlauches 9 in die Rohrleitung 1 ist identisch mit der Beschreibung zu Fig. 5.

Die auf diese Weise erzeugten mit Pfeilen 127 dargestellten Strahlungen leuchten auf einmal das Innere des Schlauches 9 durch und verkürzen wesentlich die Aushärtungszeit.

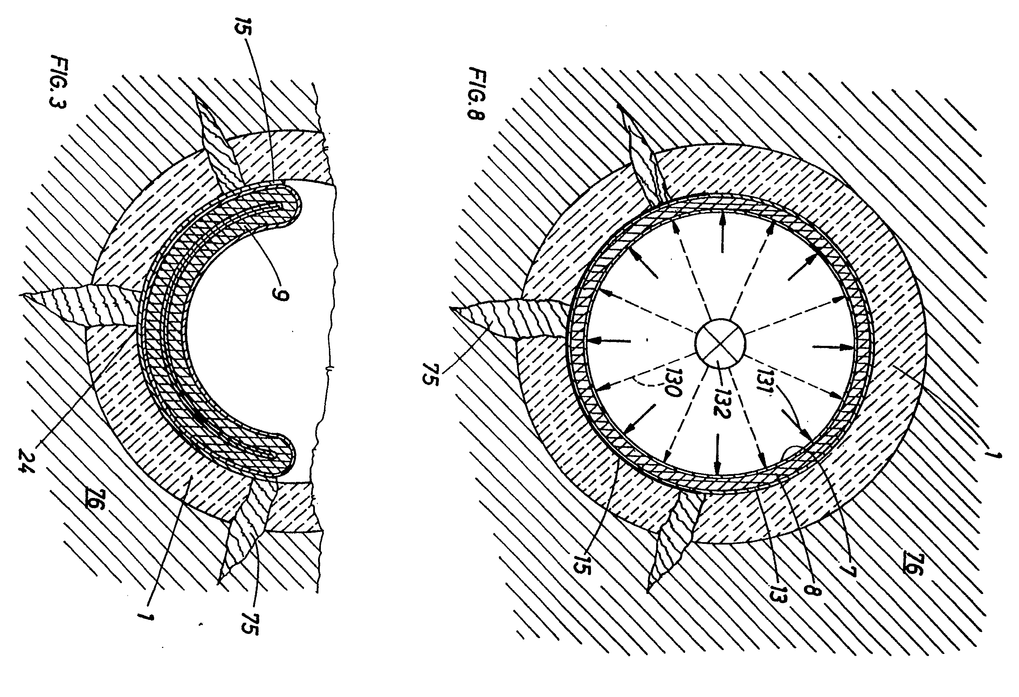

In Fig. 8 ist im Querschnitt eine mit Rissen 75 beschädigte im Erdreich 76 verlegte Rohrleitung 1 und ein aufgeblasener dreilagiger Schlauch 9 mit dem Schutzmantel 15 während des Aushärtens dargestellt. Mit Pfeilen werden die Strahlen 130 und der auf den Schlauch wirkende Luftdruck 131 dargestellt. Die Strahlungsquelle ist mit Bezugszahl 132 bezeichnet.

Der Schlauch 9 setzt sich aus drei Lagen 7,8,13 zusammen. Die Lagen 7,8,13 werden beispielsweise wie folgt gewählt.

Die Innenlage 7 bildet eine lose, luftundurchlässige sowie Strahlen durchlässige Kunststoff-Folie z.B. aus Polyamid oder Polytetrafluorethylen (PTFE) etwa in der Stärke von 0,2 mm.

Die Zwischenlage 8 besteht aus einem textilen mit Harz imprägnierbaren Material, vorzugsweise aus einem Nadelfilz. Nach einem anderen Vorschlag kann die Zwischenlage 8 auch aus einem Vlies aus Chemiefaser, Glasfaser, Laminat oder Roving gebildet werden.

Je nach Bedarf oder Sanierungsanforderung kann die Zwischenlage 8 in wenigstens einer seiner Längs-, Umfangs-, und Dickenrichtung mit Verstärkungen, vorzugsweise in Form von Gewebe, Gitter, Gewirke oder mit mehrdimensionalen Gebilden mit Fäden aus Glas, Aramit, Kevlar, Carbon, Metel verstärkt werden. Mit diesen Verstärkungen kann erreicht werden, dass die ausgehärteten Schläuche eine höhere Festigkeit als die sanierte Rohrleitung aufweisen. Im Prinzip können höhere Festigkeitswerte als bei Stahlröhren gleicher Dicke sowie die GFK Qualität erreicht werden. Die Stärke der Zwischenlage 8 beträgt vorzugsweise zwischen 1 bis 20 mm oder mehr.

Die Verstärkungen in der Zwischenlage 8 können entweder so ausgebildet werden, dass beim Aufblasen der Schlauch 9 am Umfang überhaupt nicht dehnbar ist, um Leitungen mit genau bestimmten Durchmesser und ohne Anpressung an die zu sanierende Rohrleitung 1 herstellen zu können, oder dass der Schlauch 9 sich soweit ausdehnen kann, bis die in die Rohrleitung 1 führenden nicht dargestellten Zuleitungen im Innern des Schlauches abgezeichnet werden. Diese Lösung bietet den Vorteil, dass die abgezeichneten Zuleitungen oder Muffen leicht und schnell gefunden werden können und deren Ausfräsen sowie die bei den Sanierungen immer anspruchsvolle Wasserhaltung, d.h. die Verstopfung der Zuleitungen den Sanierer vor keine nennenswerten Probleme stellt.

Die als Aussenlage 13 gewählte Kunststoff-Folie hat eine Stärke von etwa 0,2 mm und kann beispielsweise aus Polyethylen gebildet werden.

Bei der Herstellung des Schlauches wird zuerst die Zwischenlage 8 bildende und in der Breite auf den gewünschten Schlauchdurchmesser zugeschnittene Bahn um die Innenlage 7 derart gelegt, dass die aneinanderliegenden Ränder fortlaufend vorzugsweise zusammengenäht oder geschweisst werden können. Dann wird die flachgelegte Zwischenlage 8 mit der eingeschlossenen Innenlage 7 auf eine Vorratstrommel aufgerollt, zur Imprägnierstrecke gebracht und mit der in der Fig. 1 und 2 dargestellten Vorrichtung mit Harz imprägniert.

Bei dem Harz 11 handelt es sich vorzugsweise um ein mit in physiologisch ungefährlichen UV-Strahlen Bereich härtbares Harz, z.B. um Harzsysteme auf der Basis von ungesättigtem Polyester (UP), Epoxyd (EP), oder Vinielester (VE), bekannt z.B. unter der Marke Palatal. Es kann auch ein auf die speziellen Verfahrungsbedürfnisse angepasstes Harz verwendet werden.

Bei der Imprägnierung einer grösseren Zahl von Laufmetern der Zwischenlage 8 kann das Harz derart eingedickt werden, dass bei der gestiegenen Viskosität die Styrol Ausdunstung weitgehend unterbunden werden kann.

Zur Harzaushärtung wählt man als Strahlungsquelle vorzugsweise eine UV-Lampe, eine UV-Röhre oder einen UV-Ofen mit UV-Strahlungen in physiologisch unbedenklichen Bereich, mit einer Leistung von etwa 400 bis 1000 Watt. Bei der Wandungsstärke der Zwischenlage über 10mm ist eine Leistung von 2000 Watt erforderlich.

Die mit Harz imprägnierte Zwischenlage 8 wird anschliessend mit der Aussenlage 13 bildenden Kunststoff-Folie umhüllt (Fig. 1 und 2). Die Kunststoff-Folie ist vorteilhafterweise aus einem für UV-Strahlen undurchlässigen Material z.B. aus einer schwarzen Folie aus Polyethylen gebildet. Dadurch kann erreicht werden, dass der mit UV-Strahlen härtbarem Harz 11 imprägnierte Schlauch 9 im Voraus auf Mass vorbereitet und mehrere Monate ohne Aushärtungsgefahr durch die natürlichen UV-Strahlen gelagert werden kann.

Um bei der Sanierung die Aushärtungszeiten verkürzen zu können, kann an der der Zwischenlage 8 zugewandten Seite der Aussenlage 13 eine UV-Strahlen reflektierbare Schicht angebracht werden.

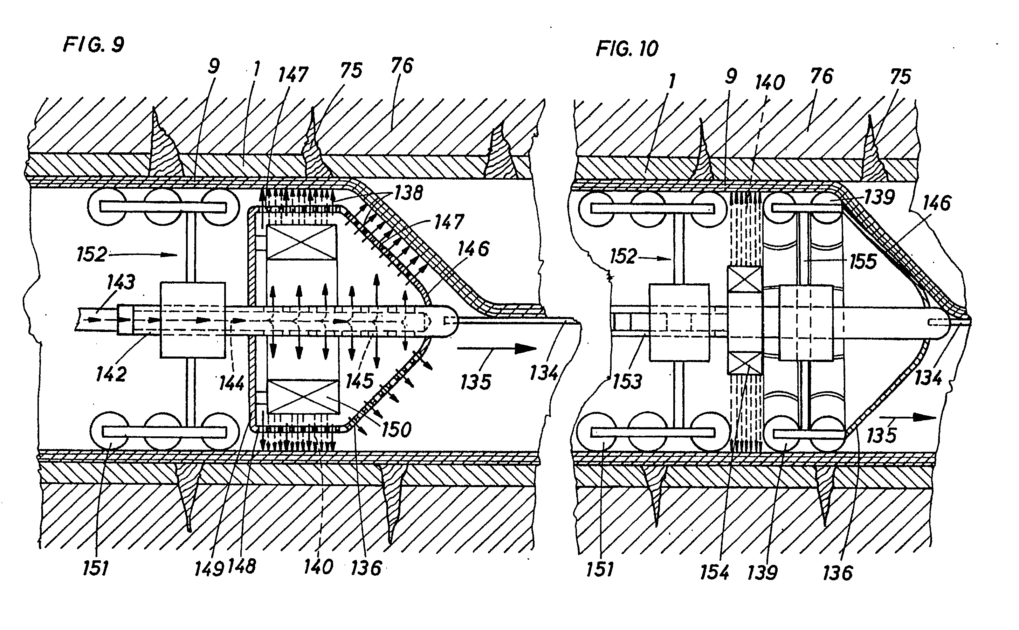

In Fig. 9 und 10 werden Varianten einer mit Druckluft und einer mit balligen Walzen versehenen Vorrichtung zum Auftreiben des Schlauches an die zu sanierende Rohrleitung einschliesslich der Strahlungsquellen dargestellt. Die prinzipielle Arbeitsweise beider Vorrichtungen ist gleich. Das durch den dreilagigen Schlauch 9 mit einem in der Rohrleitungslängsachse angebrachten Zugseil 134 und in der Pfeilrichtung 135 gezogenen Vorrichtungen haben an ihrer Stirnseite eine kegelförmige Anlauf- und Ausweitungsfläche 136. Der auf dem Zugseil 134 liegende Schlauch 9 wird von innen aus kreisförmig von diesen Anlauf- und Ausweitungsflächen 134 bis zur Rohrwand ausgeweitet und mit Druckluft 138 oder mit balligen Walzen 139 an die Rohrleitung 1 angepresst und gleichzeitig mit Strahlung 140 zur Aushärtung gebracht. Bei dieser Lösung ist es vorteilhaft, dass auch sehr kurze beschädigte Rohrleitungsabschnitte saniert werden können, ohne dass sich der Schlauch 9 vom Schacht 2 zu Schacht 3 erstrecken muss.

Die in Fig. 9 dargestellte Vorrichtung hat einen in der Längsachse gelegenen hohlen rohrförmigen Träger 142, an dessen Vorderteil das Zugseil 134 befestigt und in der Pfeilrichtung 135 gezogen wird. Am Hinterteil des Trägers ist ein Druckluftanschluss 143 angebracht. Die Druckluft wird durch den hohlen Träger 142 in der Pfeilrichtung 144 zum Vorderteil geführt und tritt aus den am Umfang des Trägers 142 vorgesehenen Oeffnungen 145 in den hohlen dornförmigen Anlauf- und Ausweitungsteil 136 der Vorrichtung aus. Der dornförmige Anlauf- und Ausweitungsteil 136 hat zuerst eine kegelförmige mit Löchern 147 versehene Fläche 146, die in eine zylinderische Mantelfläche 148 übergeht und mit einer senkrecht zur Längsachse stehenden Kreisscheibe 149 abgeschlossen wird. Innerhalb des Anlauf- und Ausweitungsteiles 136 ist an der Kreisscheibe 149 eine ringförmig ausgebildete Strahlungsquelle 150 befestigt. Die in den hohlen Raum des Anlauf- und Ausweitungsteils 136 eintretende Druckluft weicht durch Oeffnungen 147 in der Pfeilrichtung 138 aus, hebt beim Durchziehen der Vorrichtung in der ersten Phase den Schlauch 9 auf und drückt den Schlauch 9 in der zweiten Phase an die Rohrleitung 1 an. Die mit 140 bezeichneten aus der Strahlungsquelle 150 in der Pfeilrichtung 140 austretenden Strahlen härten gleichzeitig den Schlauch 9 aus. Die Fortbewegung der Vorrichtung ist mit einem mit Rollen 151 vorgesehenen Fahrgestell gewährleistet.

Die in der Fig. 10 dargestellte Vorrichtung unterscheidet sich im Prinzip von der oben beschriebenen (Fig. 9) nur dadurch, dass der Schlauch 9 an die Rohrleitung 1 mit balligen am Umfang angebrachten Walzen 139 angepresst wird. Sie hat einen in der Längsachse gelegenen Träger 153 mit einer Befestigung für das Zugseil 134. An den kegelförmig ausgebildeten Anlauf- und Ausweitungsteil 146 des Vorderteils der Vorrichtung schliessen zwei Reihen kreisförmig angeordneter balliger Walzen 139 an, die von einem Trägergestell 155 getragen sind. Die Strahlungsquelle 154 ist kreiförmig um die Längsachse am Träger 153 angebracht. Ein Fahrgestell 152, in dem der Träger 153 verankert ist, ist mit Rollen 151 versehen.

**Patentansprüche**

1. Verfahren zur Sanierung verlegter Rohrleitungen, bei welchem ein Schlauch mit einer gasdichten Aussenlage, einer Innenlage und einer mit härtbarem Harz imprägnierten Zwischenlage aufgetrieben und das Harz im aufgetriebenen Zustand des Schlauches ausgehärtet wird, dadurch gekennzeichnet, dass die Innenlage aus U.V.-strahlendurchlässigem Material besteht, die Zwischenlage (8) mit einer durch UV-Strahlung härtbaren Harzmischung imprägniert wird, der Schlauch (9) in die Rohrleitung eingezogen und darin mittels einer durch die Rohrleitung hindurchgeführten UV-Strahlungsquelle (102) bestrahlt und während der Aushärtung dauernd mittels Druckluft (138) aufgeblasen wird, von welcher ein Teil dauernd aus dem Schlauch (9) entweicht.

2. Verfahren nach Anspruch 1, dadurch gekennzeichnet, dass ein in seiner Umfangs- und Längsrichtung nicht dehnbarer Schlauch (9) verwendet wird.

3. Verfahren nach Anspruch 2, dadurch gekennzeichnet, dass ein Schlauch (9) verwendet wird, dessen Zwischenlage (8) aus einem textilen Material, vorzugsweise aus einem Nadelfilz oder einem Vlies aus Chemiefasern besteht.

4. Verfahren nach Anspruch 1, dadurch gekennzeichnet, dass ein Schlauch (9) verwendet wird, dessen Zwischenlage (8) in wenigstens einer seiner Längs-, Umfangs- und Dickenrichtung mit Verstärkungen, vorzugsweise in Form von Gewebe, Gitter, Gewirke oder mit mehrdimensionalen Gebilden mit Fäden aus Glas, Aramit, Kevlar, Carbon, Metall verstärkt ist.

5. Verfahren nach Anspruch 1, dadurch gekennzeichnet, dass ein Schlauch (9) verwendet wird, dessen Zwischenlage (8) aus einem sog. Glasfaservlies, Laminat oder Roving erstellt ist.

6. Verfahren nach Anspruch 1, dadurch gekennzeichnet, dass das Harz ein Polyester oder ein Epoxyd ist.

7. Verfahren nach Anspruch 1, dadurch gekennzeichnet, dass das Harz mit Hilfe wenigstens einer im Schlauchinnern verfahrbaren Strahlungsquelle (102; 113) ausgehärtet wird.

8. Verfahren nach Anspruch 1, dadurch gekennzeichnet, dass der Schlauch (9) zusammen mit einem wenigstens seine untere Umfangshälfte umfassenden Schutzmantel (15) in die Rohrleitung eingeführt wird, der mit einem selbsthärtenden Harz imprägniert wird, das nach Einbringen des Schlauches in die Rohrleitung aushärtet.

9. Verfahren nach Anspruch 1, dadurch gekennzeichnet, dass die Aussenlage (13) aus einem für UV-Strahlen undurchlässigem Material besteht und an der der Zwischenlage (8) zugekehrten Seite für die Strahlung reflektierend ist.

10. Verfahren nach Anspruch 1, dadurch gekennzeichnet, dass zum Härten des Harzes (11) eine mit einem konkaven Reflektor (122) versehene Strahlungsquelle (123) und am gegenüberliegenden Ende des Schlauches ein konvexer Reflektor (125) verwendet wird.

## Claims

1. A method for the renovation of installed conduits, where a hose comprising a gas-tight outer layer, an inner layer and an intermediate layer impregnated with curable resin is inflated and the resin is cured in the inflated state of the hose, character-ized in that the inner layer consists of a material which is transparent to UV radiation, the interme-diate layer (8) is impregnated with a resin mix which can be cured by UV radiation, the hose (9) is pulled into the conduit and is irradiated therein by means of a UV radiation source (102) passed through the conduit, and while curing is permanently inflated by means of compressed air (138), where part of said compressed air permanently escapes from the hose (9).

2. A method according to claim 1, characterized in that there is used a hose (9) which is extensible in its peripheral and longitudinal direction.

3. A method according to claim 2, characterized in that a hose (9) is used, whose intermediate layer (8) consists of a textile material, preferably of a needleloom felt or a fleece of chemical fibers.

4. A method according to claim 1, characterized in that a hose (9) is used, whose intermediate layer /8) is reinforced in at least one of its longitudinal, pe-ripheral and thickness directions with reinforce-ments, preferably in the form of woven cloth, screen, knitted fabric, or with multidimensional structures having threads of glass, aramide kevlar, carbon, or metal.

5. A method according to claim 1, characterized in that a hose (9) is used, whose intermediate layer /8) is made of a so-called glass fiber fleece, laminate or roving.

6. A method according to claim 1, characterized in that the resin is a polyester or an epoxide.

7. A method according to claim 1, characterized in that the resin is cured by means of at least one radia-tion source (102; 113) which is movable inside the hose.

8. A method according to claim 1, characterized in that the hose (9) is introduced into the conduit together with a protective cover (15) which surrounds at least the bottom half of its periphery and is im-pregnated with a self-curing resin, which cures after the hose has been introduced into the conduit.

9. A method according to claim 1, characterized in that the outer layer (13) consists of a material imper-vious to UV radiation, and is reflecting for the radiation at the side facing the intermediate layer (8).

10. A method according to claim 1, characterized in that for curing the resin (11) there is used a radiation source (123) provided with a concave reflector (122), and at the opposite end of the hose a convex reflector (125).

**Revendications**

1. Procédé de rénovation de canalisations posées, par lequel on gonfle un boyau comprenant une couche ex-térieure étanche au gaz, une couche intérieure et une couche intermédiaire imprégnée de résine dur-cissable et par lequel il y a un durcissement complet de la résine du boyau une fois gonflé, caractérisé en ce que la couche intérieure se compose d'un matériau laissant passer les rayons ultraviolets (UV), en ce que la couche intermédiaire (8) est imprégnée d'un mélange de résine durcissable sous l'effet de rayons UV et en ce que le boyau (9) est introduit dans la canalisation et y subit des radiations émanant d'une source d'émission de rayons UV (102), introduite dans la canalisation et est, en cours de durcissement, constamment gonflé au moyen d'air comprimé (138), dont une partie s'échappe en permanence du boyau (9).

2. Procédé conforme à la revendication 1 caractérisé en ce qu'on utilise un boyau (9) non dilatable dans son sens périphérique et longitudinal.

3. Procédé conforme à la revendication 2 caractérisé en ce qu'on utilise un boyau (9), dont la couche inter-médiaire (8) se compose d'un matériau textile, de préférence, d'un feutre garni de poils ou d'un voile en fibres chimiques.

4. Procédé conforme à la revendication 1 caractérisé en ce qu'on utilise un boyau (9), dont la couche inter-médiaire (8) est renforcée à tout le moins dans un de ses sens longitudinal, périphérique ou en épaisseur au moyen de renforts, de préférence sous la forme de tissus, treillis, voile ou de structures multi-dimensionnelles présentant des fils de verre, aramite, kevlar, carbone, métal.

5. Procédé conforme à la revendication 1 caractérisé en ce qu'on utilise un boyau (9), dont la couche inter-médiaire (8) est composée d'un dit mat ou voile en fibres de verre, laminé ou roving.

6. Procédé conforme à la revendication 1 caractérisé en ce que la résine est un polyester ou un époxy.

7. Procédé conforme à la revendication 1 caractérisé en ce que la résine parvient à durcissement au moyen à tout le moins d'une source émettrice de radiations (102; 113) mobile à l'intérieur du boyau.

8. Procédé conforme à la revendication 1 caractérisé en ce que le boyau (9) est introduit dans la canalisa-tion conjointement avec une enve-loppe protèctrice (15) entourant au moins la moitié inférieure de sa périphérie, laquelle est imprégnée d'une résine auto-durcissable, qui durcit après l'introduction du boyau dans la canalisation.

9. Procédé conforme à la revendication 1 caractérisé en ce que la couche extérieure (13) consiste en un ma-tériau ne laissant pas passer les rayons UV et ré-fléchit le rayonnement à la face orientée vers la couche intermédiaire (8).

10. Procédé conforme à la revendication 1 caractérisé en ce que, pour le durcissement de la résine (11), on utilise une source de radiations (123) équipée d'un réflecteur concave (122) et, à l'extrémité opposée du boyau, un réflecteur convexe (125).

FIG. 1

EP 0 228 998 B1

FIG. 2

EP 0 228 998 B1

FIG. 4

FIG. 6

EP 0 228 998 B1

FIG.5

FIG.7

FIG.8

FIG. 3

FIG. 9

FIG. 10